# EUROPEAN PATENT SPECIFICATION

(11) **EP 2 759 189 B1**
(45) Date of publication and mention of the grant of the patent: **29.05.2019**
(21) Application number: 13157250.5
(22) Date of filing: 28.02.2013
(51) Int. Cl.: A01D 34/90

(54) **Vegetation trimmer**
Pflanzenschneidvorrichtung
Débroussailleuse

(30) Priority: 28.01.2013 CN 201320046684 U
(43) Date of publication of application: 30.07.2014
(73) Proprietor: Techtronic Outdoor Products Technology Limited, Hamilton HM12 (BM)
(72) Inventor: Zhou, Haijun, Dongguan City (CN); Wang, Zhengjun, Dongguan City, Guangdong Province (CN); Wang, Hoi Pang, Kowloon (CN); Chung, Koon For, Sai Kung (CN)
(74) Representative: Stevenson-Hill, Jack Patrick

(56) References cited:
- EP-A1- 2 724 605
- WO-A1-2012/095029
- US-A- 4 188 719
- US-A1- 2008 110 148
- US-B2- 7 627 952

## Description

### Technical Field

The present invention relates to a vegetation trimmer, and in particular, a hand-held vegetation trimmer.

### Background of the Invention

Hand-held vegetation trimmers are commonly used to cut and trim grass and other vegetation. They are particularly useful for trimming grass around trees, buildings, fences and other areas not easily accessible to a lawn mower.

A hand-held vegetation trimmer typically includes an elongated shaft having a cutting head at one end and a handle at the other end so that the user may hold the trimmer so that the cutting head is positioned near the grass. A motor is used to rotate the cutting head. Since the vegetation trimmer is hand-held, it is important that the user can effectively control the trimmer when the cutting head is rotating. Accordingly, the position of the handle and motor are important to maintain balance and control.

Typically, the motor is located either at the bottom end of the shaft just above the cutting head or near the top end of the shaft behind the handle.

WO-A-2012/095029, according to its abstract, describes a portable cutter which comprises an operating rod, a working assembly deposited at one end of the operating rod, a motor for actuating the working assembly and deposited about the working assembly, a transmission mechanism deposited between the motor and the working assembly. The working assembly comprises a pair of upper and lower saw blades which is deposited coaxially and rotated opposite to each other. A rotation of the motor is passed to the blades via the transmission mechanism, and the speed ratio between the motor and the blades is from 30:1 to 60:1. The motor outputs a high rotate speed, while the upper and lower saw blades output a low rotate speed. The blades of the portable cutter thus can work efficiently under a safe working condition, and the electricity consumption is low. Furthermore, the transmission mechanism between the motor and the working assembly has small volume and lightweight, which is advantageous for an operator to operate manually.

US 7,627,952 provides a vegetation trimmer having a cutting head at one end of a flexible drive shaft and a front and rear handle located at the other end of the drive shaft. A motor for rotating the cutting head is located between the front and rear handle. The motor is offset from the drive shaft so that the motor is located beneath the drive shaft when the vegetation trimmer is oriented with the rear handle in an uppermost position.

US-A-2008/110148, according to its abstract, describes a power-driven grass mower includes an operation division having a grass cutter; a motor division having an electric motor and a power-source division having a battery, wherein the operation division is provided with a first means for watching if the motor division is locked for some reason or other, and a second means for putting the motor division into the inching operation in response to any signal from the first means indicating that the motor division is in a locking condition.

### Summary of the Invention

The present invention provides a hand-held vegetation trimmer comprising the features of claim 1.

Preferably, the hand-held vegetation trimmer comprises a second, flexible shaft. Still preferably, the second, flexible shaft includes a plurality of wires.

Preferably, the second, flexible shaft includes a first end portion and a second end portion, each end portion forming a square shaft.

Preferably, the hand-held vegetation trimmer further includes a sleeve surrounding the plurality of wires.

Preferably, the hand-held vegetation trimmer further includes a transmission portion connecting the motor with the first shaft.

Preferably, the first handle includes a center portion attached to the first shaft and two end portions, wherein each end portion extends generally perpendicular to the first shaft.

Preferably, the second handle includes means to selectively control motor speed.

### Brief Description of the Drawings

Features of the present invention will be better and is relevance to the following description of the invention which is given by way of example only.
Figure 1 shows a perspective view of a preferred embodiment of a vegetation trimmer according to the present invention; and
Figure 2 shows a partial view of the vegetation trimmer of Figure 1.

### Details Description of the Preferred Embodiment

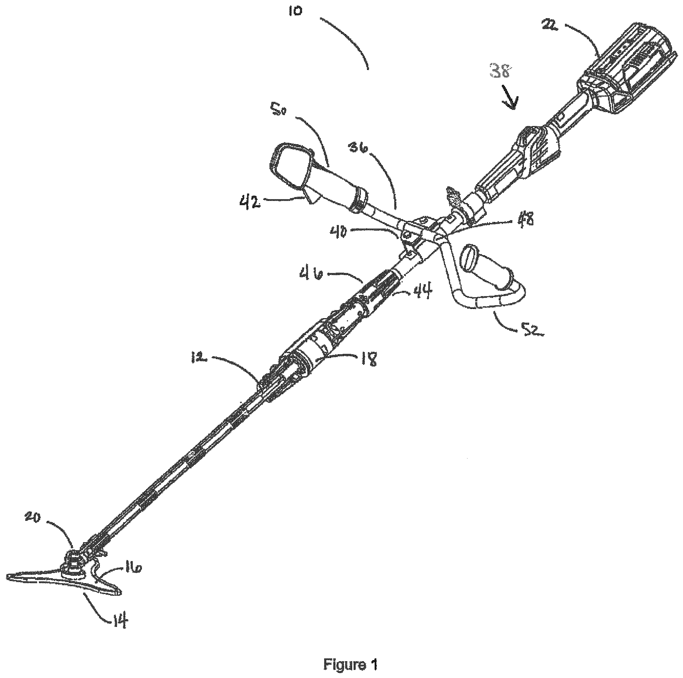

Referring to Figure 1 the vegetation trimmer 10 includes a first shaft having a cutting blade 14 attached at one end and a front handle 36 attached at a second end. The first shaft may be formed from steel or other suitable material. A guard 16 is positioned around the cutting blade 14 to protect a user while the cutting blade 14 is rotating. The cutting blade 14 is driven by a motor 18 through the first shaft and a gear box 20. The motor 18 is attached concentrically with the first shaft and positioned about midway along the first shaft between the cutting blade 14 and the front handle 36. Positioning the motor 18 about midway along the first shaft improves balance thus making it easier to control the trimmer 10.

In one embodiment, the vegetation trimmer 10 includes a second, flexible shaft 12. The second, flexible shaft 12 further decreases shock to the motor 18 when the cutting blade 14 is rotating thus promoting easier control for the user as well as optimizing motor life. The second, flexible shaft 12 may be formed from a large bundle of entwined wires formed from steel, copper alloys, or other suitable material. Preferably, a sleeve, or casing 24 surrounds the second, flexible shaft 12. The casing 24 may be formed from a low friction, high strength, high temperature plastic such as nylon, Teflon or the like. Preferably, the casing 24 includes fiber reinforcement for wear resistance. The casing 24 includes one or more spacers 26 for centering the casing 24 within the housing 28. The spacers 26 may be formed from low friction, high strength plastics such as nylon, Teflon, or the like. Preferably, the spacers 26 are integral with the casing 24. Each end 30 of the second, flexible shaft 12 may be formed into a square shaft for torque transmission. Each end 30 may be welded together to avoid separation of the wire bundle. In this way no additional fittings are required.

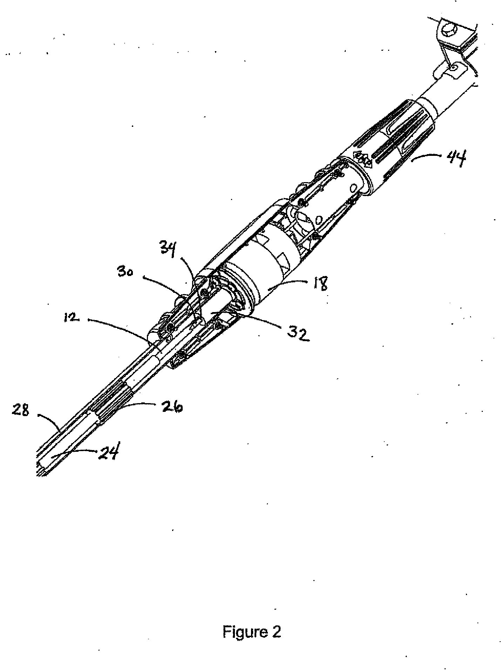

As shown in Figure 2 an adaptor 32 connects the motor 18 and the second, flexible shaft 12. The adaptor 32 includes a square aperture 34 to receive the square end of the first shaft 12. A battery 22, attached to the other end of the first shaft, provides power to the motor 18.

A rear handle 38 is attached to the first shaft near the battery 22. A bracket assembly 40 connects the front handle 36 to the first shaft. The bracket assembly 40 includes a bracket and screws. The bracket assembly 40 allows the user to adjust the front handle 36 by moving it along the first shaft and also by tilting the handle 36 forward or rearward to suit the user's height. The front handle 36 includes a center portion 48 attached to the first shaft 12 and two end portions 50, 52. Each end portion 50, 52 extends generally perpendicular to the first shaft 12, and may be shaped similar to a bicycle handle. This bicycle handle shape allows the user to more easily balance and control the trimmer 10 while the cutting blade 14 is rotating. Of course other handle shapes may also, be suitable such as a J-shape, loop shape or the like. A shoulder harness (not shown) may also assist the user for more ergonomic use of the trimmer 10. The front handle 36 may also include a control switch 42 for controlling the cutting blade 14.

The rear handle 38 is attached to the first shaft between the front handle 36 and the battery 22 so that in use, the user is able to hold the trimmer 10 by grasping a portion of the front handle 36 with one hand and the rear handle 38 with the other hand and angle the trimmer 10 downward to engage the cutting blade 14 with the vegetation. Alternatively, the user may grasp only the front handle 36 with both hands.

Both the rear handle 38 and the motor 18 are assembled with a quick disconnect mechanism 44, 46 so that the user can easily disassemble the trimmer 10 for storage when not in use. The quick disconnect mechanism 44, 46 includes a plastic collar and two separate steel tube of different diameters overlapped together (not shown). It will be understood that other quick disconnect mechanisms may also be used such as a metal latch, cotter pin and clip or the like.

Although the invention has been described with reference to specific examples, persons skilled in the art will appreciate that the invention can be embodied in many other forms falling within the scope of the appended claims.

## Claims

1. A hand-held vegetation trimmer (10) including:
a first shaft ;
a cutting blade (14) disposed at a first end portion of the first shaft ;
a first handle (36) disposed at a second end portion of the first shaft;
a motor (18) in communication with the cutting blade (14), the motor (18) disposed on the first shaft, wherein the motor (18) is concentric with the first shaft and located midway along the first shaft between the cutting blade (14) and the first handle (36) and wherein the hand-held vegetation trimmer (10) further includes a second handle (38) attached to the first shaft between the first handle (36) and a battery (22) and located at the second end portion of the first shaft so that the first handle (36) is between the second handle (38) and the cutting blade (14).

2. The hand-held vegetation trimmer (10) of claim 1, wherein the first handle (36) includes a center portion (48) attached to the first shaft and two end portions (50, 52), wherein each end portion (50, 52) of the first handle (36) extends perpendicular to the first shaft and wherein the hand-held vegetation trimmer (10) further includes a bracket assembly (40) connecting the first handle (36) to the first shaft and allowing adjustment of the first handle (36) by moving it along the shaft and by tilting the first handle (36) forward or rearward.

3. The hand-held vegetation trimmer (10) of claim 1, further comprising a second, flexible shaft (12).

4. The hand-held vegetation trimmer (10) of claim 3, wherein the second, flexible shaft (12) includes a plurality of wires.

5. The hand-held vegetation trimmer (10) of claim 3 or 4, wherein the second, flexible shaft (12) includes a first end portion and a second end portion, each end portion forming a square shaft.

6. The hand-held vegetation trimmer (10) of claim 4 or 5, further including a sleeve (24) surrounding the plurality of wires.

7. The hand-held vegetation trimmer (10) of any one of the preceding claims, further including a transmission portion connecting the motor with the first shaft.

8. The hand-held vegetation trimmer (10) of claim 1, wherein the second handle (38) includes means to selectively control motor speed.

## Patentansprüche

1. Tragbarer Vegetationstrimmer (10), einschließend:
eine erste Welle;
ein Schneidmesser (14), das an einem ersten Endabschnitt der ersten Welle angeordnet ist;
einen ersten Griff (36), der an einem zweiten Endabschnitt der ersten Welle angeordnet ist;
einen Motor (18) in Kommunikation mit dem Schneidmesser (14), wobei der Motor (18) auf der ersten Welle angeordnet ist, worin der Motor (18) konzentrisch zur ersten Welle ist und auf halbem Weg entlang der ersten Welle zwischen dem Schneidmesser (14) und dem ersten Griff (36) angeordnet ist, und worin der tragbare Vegetationstrimmer (10) ferner einen zweiten Griff (38) einschließt, der an der ersten Welle zwischen dem ersten Griff (36) und einer Batterie (22) befestigt ist und am zweiten Endabschnitt der ersten Welle angeordnet ist, so dass sich der erste Griff (36) zwischen dem zweiten Griff (38) und dem Schneidmesser (14) befindet.

2. Tragbarer Vegetationstrimmer (10) nach Anspruch 1, worin der erste Griff (36) einen Mittelabschnitt (48), der an der ersten Welle befestigt ist, und zwei Endabschnitte (50, 52) einschließt, worin sich jeder Endabschnitt (50, 52) des ersten Griffs (36) senkrecht zur ersten Welle erstreckt und worin der tragbare Vegetationstrimmer (10) ferner eine Halterungsanordnung (40) einschließt, die den ersten Griff (36) mit der ersten Welle verbindet und die Einstellung des ersten Griffs (36) durch Bewegen desselben entlang der Welle und durch Kippen des ersten Griffs (36) nach vorne oder hinten ermöglicht.

3. Tragbarer Vegetationstrimmer (10) nach Anspruch 1, ferner eine zweite, flexible Welle (12) umfassend.

4. Tragbarer Vegetationstrimmer (10) nach Anspruch 3, worin die zweite, flexible Welle (12) eine Vielzahl von Drähten einschließt.

5. Tragbarer Vegetationstrimmer (10) nach Anspruch 3 oder 4, worin die zweite, flexible Welle (12) einen ersten Endabschnitt und einen zweiten Endabschnitt einschließt, wobei jeder Endabschnitt eine Vierkantwelle bildet.

6. Tragbarer Vegetationstrimmer (10) nach Anspruch 4 oder 5, ferner eine Hülse (24) einschließend, welche die Vielzahl von Drähten umgibt.

7. Tragbarer Vegetationstrimmer (10) nach einem der vorhergehenden Ansprüche, ferner einen Übertragungsabschnitt einschließend, der den Motor mit der ersten Welle verbindet.

8. Tragbarer Vegetationstrimmer (10) nach Anspruch 1, worin der zweite Griff (38) Mittel einschließt, um die Motordrehzahl selektiv zu steuern.

## Revendications

1. Débroussailleuse portative (10) incluant :
un premier arbre ;
une lame de coupe (14) qui est disposée au niveau d'une première partie d'extrémité du premier arbre ;
un premier manche (36) qui est disposé au niveau d'une seconde partie d'extrémité du premier arbre ;
un moteur (18) en communication avec la lame de coupe (14), le moteur (18) étant disposé sur le premier arbre, dans laquelle le moteur (18) est concentrique par rapport au premier arbre et est localisé à mi-chemin le long du premier arbre entre la lame de coupe (14) et le premier manche (36) et dans laquelle la débroussailleuse portative (10) inclut en outre un second manche (38) qui est fixé au premier arbre entre le premier manche (36) et une batterie (22) et qui est localisé au niveau de la seconde partie d'extrémité du premier arbre de telle sorte que le premier manche (36) soit entre le second manche (38) et la lame de coupe (14).

2. Débroussailleuse portative (10) selon la revendication 1, dans laquelle le premier manche (36) inclut une partie centrale (48) qui est fixée au premier arbre et deux parties d'extrémité (50, 52), dans laquelle chaque partie d'extrémité (50, 52) du premier manche (36) s'étend perpendiculairement au premier arbre et dans laquelle ladite débroussailleuse portative (10) inclut en outre un assemblage de console (40) qui connecte le premier manche (36) au premier arbre et qui permet le réglage du premier manche (36) au moyen de son déplacement le long de l'arbre et en inclinant le premier manche (36) vers l'avant ou vers l'arrière.

3. Débroussailleuse portative (10) selon la revendication 1, comprenant en outre un second arbre flexible (12).

4. Débroussailleuse portative (10) selon la revendication 3, dans laquelle le second arbre flexible (12) inclut une pluralité de fils.

5. Débroussailleuse portative (10) selon la revendication 3 ou 4, dans laquelle le second arbre flexible (12) inclut une première partie d'extrémité et une seconde partie d'extrémité, chaque partie d'extrémité formant un arbre carré.

6. Débroussailleuse portative (10) selon la revendication 4 ou 5, incluant en outre une gaine (24) qui entoure la pluralité de fils.

7. Débroussailleuse portative (10) selon l'une quelconque des revendications qui précèdent, incluant en outre une partie de transmission qui connecte le moteur avec le premier arbre.

8. Débroussailleuse portative (10) selon la revendication 1, dans laquelle le second manche (38) inclut des moyens pour commander de façon sélective la vitesse du moteur.
